(19) Europäisches Patentamt / European Patent Office / Office européen des brevets

(11) **EP 4 509 902 A1**

(12) **EUROPEAN PATENT APPLICATION**

(43) Date of publication:
**19.02.2025 Bulletin 2025/08**

(21) Application number: **24191667.5**

(22) Date of filing: **30.07.2024**

(51) International Patent Classification (IPC):
**G02B 27/01** (2006.01)

(52) Cooperative Patent Classification (CPC):
**G02B 27/0172; G02B 27/0081; G02B 2027/0125**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.08.2023 US 202363533400 P**
**07.09.2023 NL 2035758**

(71) Applicant: **Corning Incorporated**
**Corning, New York 14831 (US)**

(72) Inventor: **Krol, Mark Francis**
**CORNING, 14831 (US)**

(74) Representative: **Arnold & Siedsma**
**Bezuidenhoutseweg 57**
**2594 AC The Hague (NL)**

(54) **COMPOSITE LIGHTGUIDES FOR AUGMENTED REALITY**

(57) Various examples are provided related to composite lightguides which can be used for augmented reality and other augmented display applications. In one example, a composite lightguide includes a support substrate including a surface and a lightguide layer disposed on the surface of the support substrate. The lightguide layer can have a density that is greater than the density of the support substrate. For example, the density of the lightguide layer can be greater than twice the density of the support substrate. The lightguide layer can have a thickness that is about 25% or less than the thickness of the support substrate.

FIG. 5

**Description**

**BACKGROUND**

Head-mounted displays have grown in availability and popularity due to recent advances in light projection technologies. Head-mounted displays are now capable of presenting digital, virtual images to a user. The virtual image, which may represent an object or other information, seemingly exists within the surrounding environment of the user. This is typically accomplished by projecting light from various locations of an optical element (e.g., a lens) directly to the user's eye. Head-mounted displays are also called near-to-eye or near-eye devices. These terms reference optical calculations for image formation that are different from traditional electronic displays (e.g., monitor screen). For a user of a head-mounted display, a visual experience is often called 'virtual reality' if the user is isolated from the surrounding environment, while presented with a virtual image. The term 'augmented reality' often describes a visual experience where a virtual image is presented to the user as an overlay to the real-world environment, enhancing visual information received by the user. And, when the visual experience allows for the user to interact with virtual objects that are seemingly integrated into the user's real-word environment, the experience is often called 'mixed reality.'

US 11 460701 B2 relates to a display waveguide configured for conveying image light to a viewer has a waveguide body whose refractive index varies in the thickness direction to include a high-index region between lower-index regions. The waveguide transmits a portion of image light within the high-index region of the waveguide to provide a wider field of view.

**BRIEF DESCRIPTION OF THE DRAWINGS**

Many aspects of the present disclosure can be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views.

FIGS. 1A-1D illustrate an example of a flat bulk glass lightguide optical device, in accordance with various embodiments of the present disclosure.
FIGS. 2A-2C illustrate examples of the effect of refractive index on horizontal FOV at different values of the R coefficient, in accordance with various embodiments of the present disclosure.
FIGS. 3A-3C illustrate examples of the effect of refractive index on horizontal FOV at different entrance pupil width and lightguide thickness dimensions, in accordance with various embodiments of the present disclosure.
FIG. 4 illustrates an example of lightguide thickness with respect to entrance pupil width, in accordance with various embodiments of the present disclosure.
FIG. 5 illustrates an example of a composite lightguide optical device, in accordance with various embodiments of the present disclosure.

**DETAILED DESCRIPTION**

Disclosed herein are various examples related to composite lightguides which can be used for augmented reality (AR) and other augmented display applications. Reference will now be made in detail to the description of the embodiments as illustrated in the drawings, wherein like reference numbers indicate like parts throughout the several views.

AR systems are used to add virtual objects to a real visual scene being observed by a user. An example type of AR system is wearable and utilizes eyewear in the form of eyeglasses, goggles or a helmet worn by a user, and are sometimes referred to as head-mounted display (HMDs) systems. The AR system usually includes an optical system configured to allow for viewing an object or a scene while also adding an augmenting object to the actual object or to the scene being viewed directly.

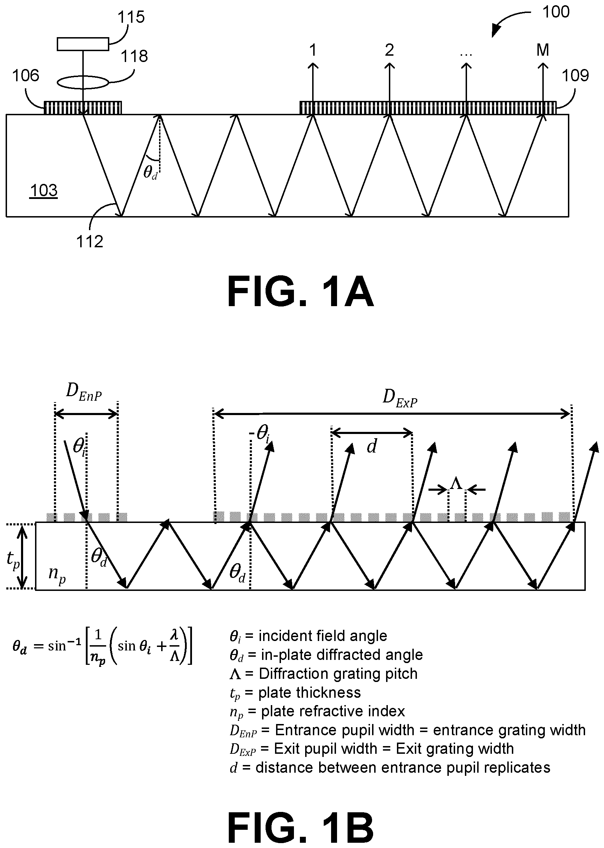

The use of lightguides is advantageous in that they can provide for compact designs that are especially useful for AR eyewear. FIG. 1A illustrates an example of a one-dimensional planar lightguide exit pupil expander optical device 100. The optical device 100 comprises a bulk glass lightguide 103, an entrance (or in-coupling) grating 106 that defines the lightguide entrance pupil with width $D_{EnP}$, and an exit (or out-coupling) grating 109 that defines the lightguide exit pupil with width $D_{ExP}$ as shown in FIG. 1B where expansion of the exit pupil is accomplished by replicating the entrance pupil across the exit pupil with distance between replicates denoted by d in FIG 1B. Other gratings such as cross-coupling gratings and crossed exit gratings can also be used for lightguides that expand the exit pupil in two-dimensions. The gratings 106 and 109 can be positioned on an interface of the lightguide 103, formed on or within a surface of lightguide 103, or located inside the lightguide 103. Types of gratings can include, e.g., a surface relief grating (SRG), volume Bragg grating (VBG), or other suitable grating type or combination of grating types. Light 112 can be provided by image source optics 115 such as, e.g.,

liquid crystal on silicon (LCOS) displays, microLED displays, laser scanners, etc. combined with suitable optics 118 for coupling into the lightguide 103. The lightguide 103 can guide the light 112 by total internal reflection (TIR) between interfaces of the lightguide 103. The lightguide 103 has a refractive index of $n_p$ and thickness $t_p$ as shown in FIG. 1B, and the material surrounding the lightguide 103 has a refractive index of $n_0$ and is typically air. TIR occurs when light 112 is incident on the top and bottom glass-air interfaces of the lightguide with an incident angle of $\theta_d$ such that:

$$\theta_d \geq \theta_c = arcsin\left(\frac{n_0}{n_p}\right), \qquad (1)$$

where $\theta_c$ is the so-called critical angle and $\theta_d$ is the diffracted angle and is related to the incident field angle $\theta_i$ by the well-known grating equation

$$\theta_d = \sin^{-1}\left[\frac{1}{n_p}\left(\sin\theta_i + \frac{\lambda}{\Lambda}\right)\right] \qquad (1a)$$

where $\lambda$ is the light wavelength and $\Lambda$ is the diffraction grating pitch as shown in FIG 1B. After coupling into the lightguide 103 via the entrance grating 106, the light 112 propagates through the lightguide 103 where at least a portion can be coupled out of the lightguide 103 by the exit grating 109.

The use of a lightguide can reduce the cost of AR glasses while improving image quality and field-of-view (FOV) allowing for viable consumer use cases, improving energy efficiency and battery life enabling practical use times with less heat generation, and achieving eyeglass-like form factors with lower weights to facilitate social acceptance and long-term comfort. What is desired are systems that provide wide FOV and good image-quality with small, compact image source optics and lightweight, single RGB (red-green-blue) lightguide eyepieces that have high brightness and good overall energy efficiency and are geometrically rigid and mechanically reliable. However, simultaneously achieving these attributes at the optical system level is challenging.

Lightguides that are currently employed tend to be stand-alone, thick bulk lightguides made from a high refractive index glass. While thick lightguides offer improved mechanical reliability and can maintain image quality, this constraint affects other desired features. Assuring that the lightguide is sufficiently thick to ensure plane-parallel plate geometry to maintain image quality and ensure mechanical reliability constrains other features. For example, thin lightguides with a high refractive index can provide improved FOV and image quality. Small source optics with small exit pupils and low density lightguides can also improve form-factor and weight. High blue transmittance lightguides can also improve energy efficiency and reduce battery size to further improve form factor and weight.

The number of replicates M across the lightguide exit pupil is important for improving both FOV and image quality. A "replicate" corresponds to a point along the exit grating 109 at which light from the lightguide entrance grating is diffracted by the exit grating 109 to the surroundings. FIG. 1A schematically depicts M replicates at exit grating 109. Each replicate corresponds to a point of interaction of the reflected light in the lightguide with the exit grating 109. A high number M of replicates leads to higher FOV and improved image quality. For thick lightguides, a high refractive index ($n_p$) is needed to enable a high number of replicates M through the reduction of the internal diffracted angle $\theta_d$ in the lightguide 103. This can be seen from the maximum and minimum replicate determinations. The maximum number of entrance pupil replicates $M_{max}$ across the exit grating 109 is determined by:

$$M_{max} = \frac{D_{ExP}}{2t_p}\sqrt{n_p^2 - 1}, \qquad (2)$$

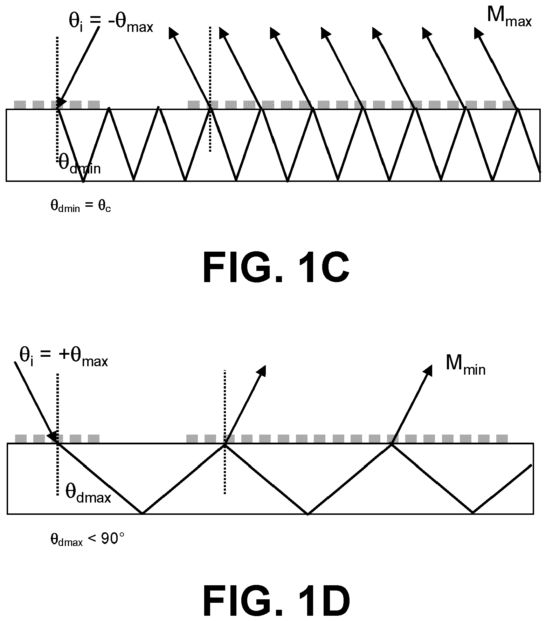

which occurs at $\theta_i = -\theta_{max}$ and the shortest wavelength ($\lambda^-$) as shown in FIG. 1C. This maximum value is based on the exit pupil width dimension ($D_{ExP}$), lightguide refractive index ($n_p$), and the lightguide thickness ($t_p$). The minimum number of replicates $M_{min}$ across the exit grating 109 is given by:

$$M_{min} = \frac{D_{ExP}}{2t_p}\sqrt{\left[\frac{n_p}{\frac{\lambda^+}{\lambda^-} + \left(1 + \frac{\lambda^+}{\lambda^-}\right)sin\theta_{max}}\right]^2 - 1} \qquad (3)$$

which occurs at $\theta_i = +\theta_{max}$ and the longest wavelength ($\lambda^+$) as shown in FIG. 1D. Considering the R coefficient (R = $M_{max}/M_{min}$) defined by T. Levola in the article "Diffractive Optics for Virtual Reality Displays", Journal of the SID 14(5), 467-475 (2006), lower R results in better exit pupil uniformity across the FOV and hence better image quality across the FOV. This can be related to the horizontal FOV (HFOV) and refractive index by: $HFOV = 2\theta_{max}^{R}$, and

$$\theta_{max}^{R} = \sin^{-1}\left[\left(\frac{1}{\lambda^{-}+\lambda^{+}}\right)\left(\frac{n_p R \lambda^{-}}{\sqrt{n_p^2 + R^2 - 1}} - \lambda^{+}\right)\right]. \quad (4)$$

where $\theta_{max}^{R}$ is the R-limited maximum field angle. A higher refractive index ($n_p$) can be used to increase the FOV for a given R or can be used to improve image quality through a lower R at a given FOV. This FOV/image quality tradeoff is directly related to the number of replicates M across the exit grating 109.

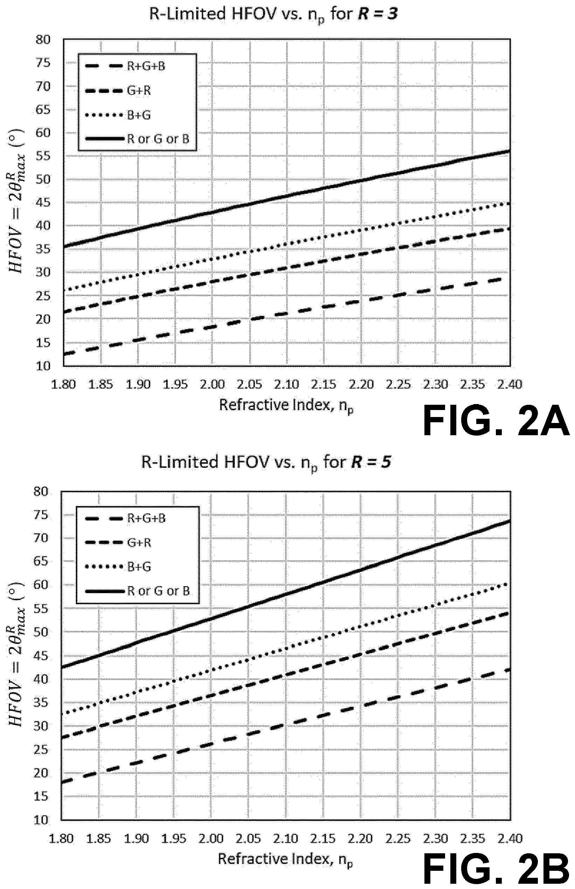

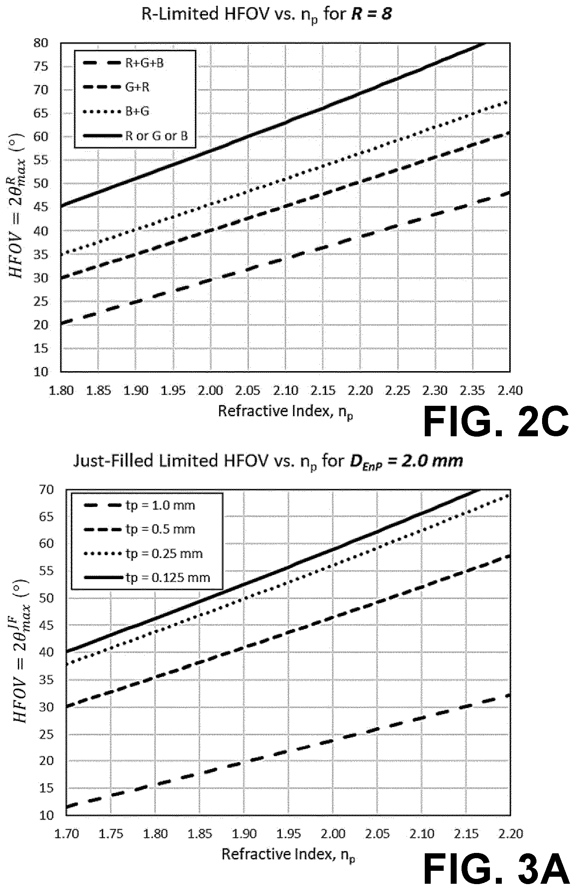

FIGS. 2A-2C illustrate the effect of refractive index ($n_p$) on horizontal HFOV at different values of the R coefficient (R = 3, 5 and 8, respectively) using Eqn. (4) above. The wavelengths for all plots are $\lambda_B$ = 465 nm, $\lambda_G$ = 525 nm, and $\lambda_R$ = 630 nm. The different traces shown in FIGS. 2A-2C represent lightguides supporting different wavelengths of light. The trace labeled "R or G or B" corresponds to a lightguide supporting any one of $\lambda_B$, $\lambda_G$, and $\lambda_R$ separately. The trace labeled "B + G" corresponds to lightguide simultaneously supporting $\lambda_B$ and $\lambda_G$. The trace labeled "G + R" corresponds to lightguide simultaneously supporting $\lambda_G$ and $\lambda_R$. The trace labeled R+B+G corresponds to lightguide simultaneously supporting $\lambda_R$, $\lambda_G$, and $\lambda_B$. As can be seen, increasing the refractive index at a given R increases the FOV, while reducing R at a given refractive index to improve image quality reduces the FOV. As shown in FIG. 2B (R = 5), a lightguide made from glass with a refractive index in the range from 2.0 to 2.2 would require three lightguides (one each for R, G, and B) to achieve a horizontal RGB FOV in the range from about 50 degrees to about 65 degrees (see trace labeled "R or G or B"). When R = 5, a lightguide made from a glass with a refractive index in the same range can enable a single RGB lightguide with a HFOV in the range from about 25 degrees to about 35 degrees (see trace labeled "R + G + B"). This is limited by the dispersive mapping of field angles to in-lightguide ray angles associated with the grating equation (Eqn. (1a)). Glass with a refractive index ≥ 2.35 can achieve a HFOV ≥ 70 degrees with individual R, G, and B lightguides.

In addition to considerations based on the R coefficient, the lightguide exit pupil should be at least just filled (JF) by replicates of the lightguide entrance pupil at $\theta_i$ = +$\theta_{max}$ to achieve satisfactory image quality at a given FOV. Thicker lightguides need larger source optics with larger exit pupils ($D_{ExP}$) for a given number of replicates and thus require a larger lightguide entrance pupil width dimension ($D_{EnP}$). That is, the just-filled condition for the exit pupil requires $M_{min} \times D_{EnP} \geq D_{ExP}$ at $\theta_i$ = +$\theta_{max}$ and the longest wavelength ($\lambda^{+}$), resulting in the just-filled condition limited maximum field angle of

$$\theta_{max}^{JF} = \sin^{-1}\left\{\frac{1}{(\lambda^{-}+\lambda^{+})}\left[\frac{n_p \lambda^{-}}{\sqrt{1+\left(\frac{2t_p}{D_{EnP}}\right)^2}} - \lambda^{+}\right]\right\}, \quad (5)$$

where $2\theta_{max}^{JF}$ is the just-filled limited HFOV. From this requirement, it can be seen that a decrease in the lightguide thickness or an increase in the refractive index leads to an increase in the just filled condition limited HFOV for a given entrance pupil width. To simultaneously satisfy the just-filled condition and deliver the desired R coefficient $\theta_{max}^{JF} \geq \theta_{max}^{R}$, results in the following constraint on the lightguide thickness ($t_p$), refractive index ($n_p$), and entrance pupil width ($D_{EnP}$):

$$D_{EnP} \geq \frac{2Rt_p}{\sqrt{n_p^2-1}} \quad \text{or} \quad t_p \leq \left(\frac{D_{EnP}}{2R}\right)\sqrt{n_p^2 - 1}. \quad (6)$$

Thus, for a given R and refractive index (and HFOV), the minimum entrance pupil width is directly proportional to the lightguide thickness or the maximum lightguide thickness is directly proportion to the entrance pupil width.

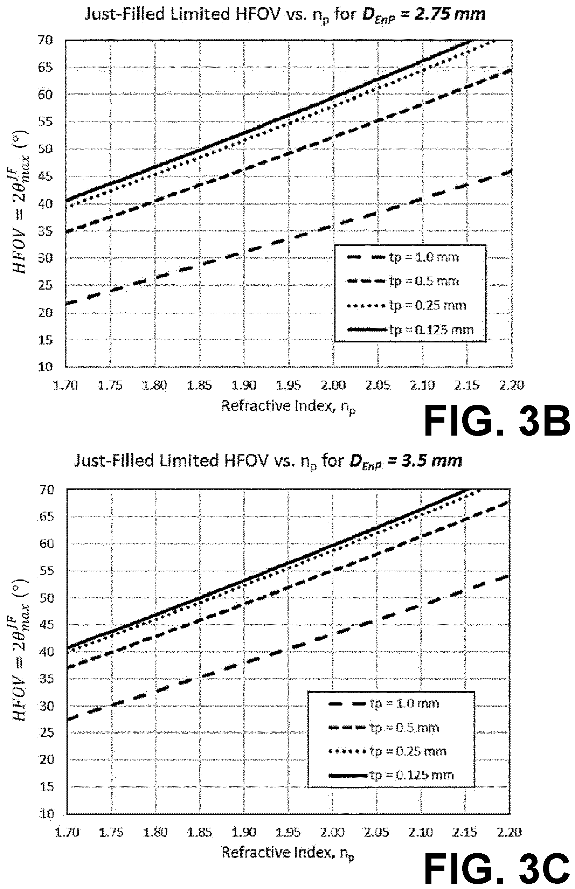

FIGS. 3A-3C illustrate the effect of refractive index ($n_p$) on HFOV at different entrance pupil widths ($D_{EnP}$ = 2.0 mm, 2.75 mm and 3.5 mm, respectively) and different lightguide thicknesses ($t_p$ = 0.125 mm, 0.25 mm, 0.5 mm, and 1.0 mm). All plots in FIGS. 3A-3C are for a single wavelength lightguide, i.e., $\lambda^{+}$ = $\lambda^{-}$. As can be seen, decreasing the lightguide

thickness ($t_p$) increases the number of replicates M as given by Eqns. (2) and (3) for a given exit pupil width $D_{ExP}$. More replicates enable larger increases in $+\theta_{max}$ before the number of replicates is reduced below the minimum number needed to satisfy the just-filled condition. The impact of decreasing the lightguide thickness is larger for smaller entrance pupils since more replicates are needed to satisfy the just-fill condition of the exit pupil.

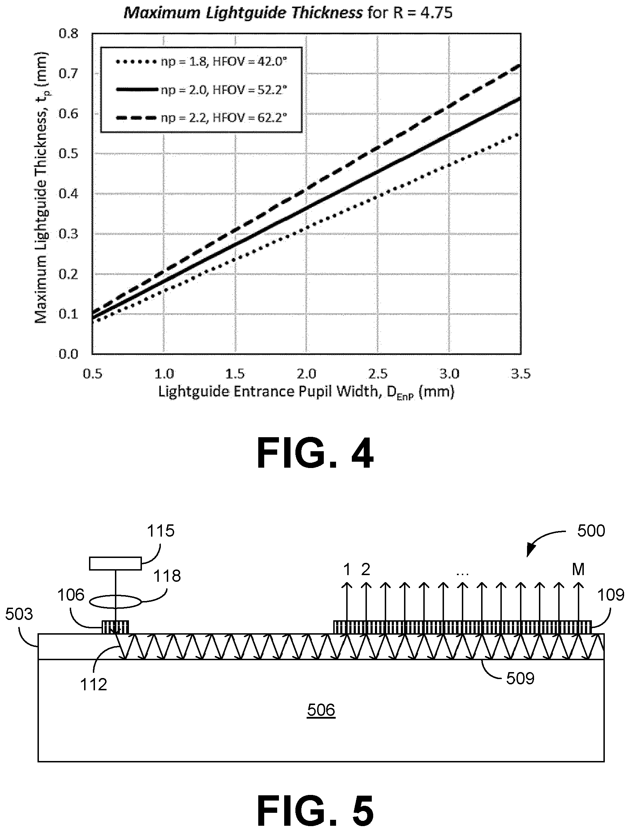

To realize opportunities for miniaturization as smaller image source optics are developed, thinner lightguides will be needed to deliver the desired image quality for a given HFOV. The maximum allowed lightguide thickness required to maintain image quality at a given HFOV is proportional to the lightguide entrance pupil width ($D_{EnP}$) of the lightguide, which corresponds to the exit pupil width of the image source optics. As image source optics become smaller, the image source optics exit pupil width decreases and the maximum lightguide thickness capable of preserving image quality decreases. FIG. 4 illustrates the variation of the maximum lightguide thickness ($t_p$) with respect to the lightguide entrance pupil width ($D_{EnP}$) for image quality corresponding to $R = 4.75$ for different refractive indices ($n_p$) and HFOVs. For instance, 0.5 mm thick lightguides enable minimum exit pupil widths of the image source optics of about 2.5 mm to about 3.0 mm depending on the HFOV, as illustrated in FIG. 4. A lightguide thickness of 0.3 mm enables minimum exit pupil widths of the image source optics of about 1.5 mm to about 2.0 mm. A lightguide thickness of 0.2 mm enables minimum exit pupil widths of the image source optics of about 1.0 mm to about 1.25 mm. Lightguide thicknesses of 0.1 mm (or less) enable the smallest image source optics and corresponding exit pupil widths and improved image quality through increased number of replicates for a given HFOV over a range of entrance pupil widths.

As discussed, the use of thick lightguides ensures a plane-parallel plate geometry to maintain image quality and ensure mechanical reliability. This drives the need for a higher refractive index and larger source optics for a given HFOV and level of image quality as defined by the R coefficient. This relationship is independent of the types of gratings 106 and 109 (FIG. 1A) being used (e.g., SRG (surface relief grating), VBG (volume Bragg grating), or a combination of both), the layout of in-coupling, cross coupling, and out-coupling gratings in the lightguide 103 (FIG. 1), or the type of image source optics (e.g., LCOS, microLED, laser scanner, etc.). By prioritizing these needs, the resulting trade-offs can be managed to achieve the implementation needed for a given application.

The use of thick lightguides drives the need for higher refractive index materials with lower density and high blue transmittance. Because the refractive index ($n_p$), internal transmittance (T) and density ($\rho$) are mutually interdependent for a given glass composition, all three cannot be optimized simultaneously. The density is given by:

$$\rho = \frac{MW}{V_m}, \tag{7}$$

where $MW$ is the molecular weight and $V_m$ is the molar volume; a simplified expression for the refractive index can be given by:

$$n = 1 + \frac{f\lambda_0^2}{V_m}C1, \tag{8}$$

and the internal transmittance (T) and simplified expression for the extinction coefficient ($\kappa$) can be given by:

$$T = e^{-\frac{4\pi\kappa}{\lambda}z}, \tag{9}$$

$$\kappa = \frac{f\Gamma\lambda_0^3}{V_m}C2. \tag{10}$$

where f is the oscillator strength, $\lambda_o$ is the oscillator resonance wavelength, $\Gamma$ is a broadening factor, C1 and C2 are constants composed of physical constants, and z is the thickness of the material. Eqns. (8) and (10) show that refractive index and extinction coefficient are coupled by the oscillator strength, oscillator resonance wavelength, and molar volume. As a result, increasing the refractive index by modifying the glass composition to increase the oscillator strength leads to an increase in the extinction coefficient and thus a reduction in transmittance. Similarly, increasing the refractive index by modifying the glass composition to decrease the molar volume leads to an increase in the extinction coefficient and thus a reduction in transmittance. There is also an indirect relationship between oscillator strength and the average molecular weight. In general, higher $MW$ results in higher oscillator strength through larger ionic radius and/or a higher number of available valence electrons. As a result, current glass lightguide based AR systems are constrained by the material characteristics and physical dimensions of the lightguide itself, which can prevent simultaneous realization of the desired HFOV and image quality, form-factor and weight, and mechanical characteristics required for practical applications in augmented reality. Thus, a new solution must be considered to overcome these constraints.

A composite lightguide is presented that allows greater latitude in separating otherwise mutually interdependent lightguide attributes from each other. While the refractive index and extinction coefficient of the lightguide are inherently coupled and cannot be separated, the density of the lightguide is coupled to the refractive index and extinction coefficient only through the molar volume, which is an attribute that can be separated at the component level. In other words, the thickness needed for guiding the light can be separated from the thickness needed to maintain the plane-parallel geometry so that it becomes possible to achieve high image quality with more compact image source optics without compromising the mechanical reliability of the lightguide.

Separation of the thickness needed for guiding light and the thickness needed for mechanical reliability can be accomplished with a composite lightguide that includes a thin glass lightguide disposed on a surface of a thicker support substrate. The thin glass lightguide can be formed from a material having a high density with a high refractive index and the thicker support substrate can be formed from a material having a low density. This enables separation of the lightguide properties from the support substrate properties and independent control of the material characteristics needed for guiding light and the material characteristics needed for mechanical reliability. High image quality and HFOV can be achieved by optimizing the refractive index and other characteristics of the lightguide without regard to mechanical stability. Thinner lightguides, for example, that are compatible with smaller source optics can be utilized irrespective of density, while mechanical reliability can be provided by the support substrate. The support substrate can be selected to have low density. Since the thickness of the composite lightguide is dominated by the thickness of the support substrate, the overall density of the composite lightguide can be low thus enabling lightweight components for augmented reality systems.

FIG. 5 illustrates an example of a composite lightguide optical device 500. The composite lightguide 500 includes a thin lightguide layer 503 disposed on a support substrate 506. The lightguide layer 503 can include an entrance (or in-coupling) grating 106 and an exit (or out-coupling) grating 109 positioned on an interface of the lightguide layer 503, or can be formed or integrated in the surface of lightguide layer 503 (e.g. by forming grooves in the surface), or can be located inside the lightguide layer 503, or can be formed at the interface between the lightguide and support interface 509. Types of gratings can include, e.g., a surface relief grating (SRG), volume Bragg grating (VBG), or other suitable grating type or combination of grating types including meta-surfaces. Light 112 can be provided by image source optics 115 such as, e.g., liquid crystal on silicon (LCOS), microLEDs, laser scanners, etc. for coupling into the lightguide 103.

The lightguide layer 503 can comprise a thin layer of glass with a high refractive index $n_d$ and high blue transmittance (e.g., 80% or greater at a wavelength of 440 nm). The glass can be a high entropy glass such as, e.g., $La_2O_3$-$Nb_2O_5$ glass or other appropriate glass or optical material. Glasses with high refractive index include significant proportions of components capable of increasing refractive index. Examples of high index glass components include $La_2O_3$, $TiO_2$, $Nb_2O_5$, $WO_3$, and $Bi_2O_3$. Glasses with high refractive index include silicates, borosilicates, tungsten borates, and phosphates that include one or more of the high index glass components.

In embodiments, the glass of the lightguide layer may comprise from 10.0 mol% to 40.0 mol% $B_2O_3$, from greater than or equal to 0 mol% to 40.0 mol% $WO_3$, from greater than or equal to 0 mol% to 30.0 mol% $Nb_2O_5$, from greater than or equal to 0 mol% to 30.0 mol% $TiO_2$, from greater than or equal to 0 mol% to 25.0 mol% $La_2O_3$, and from greater than or equal to 0 mol% to 15.0 mol% $ZrO_2$.

In embodiments, the glass of the lightguide may further comprise from greater than or equal to 0 mol% to 20.0 mol% $Bi_2O_3$, from greater than or equal to 0 mol% to 15.0 mol% $TeO_2$, from greater than or equal to 0 mol% to 10.0 mol% PbO, from greater than or equal to 0 mol% to 10.0 mol% $GeO_2$, from 0 mol% to 10.0 mol% $P_2O_5$, from greater than or equal to 0 mol% to 6.0 mol% $Y_2O_3$, from greater than or equal to 0 mol% to 5.0 mol% $V_2O_5$, from greater than or equal to 0 mol% to 10.0 mol% silica ($SiO_2$), or combinations thereof.

In embodiments, the glass of the lightguide layer may comprise greater than or equal to 0.1 mol% $WO_3$, $Bi_2O_3$, or both.

In embodiments, the glass of the lightguide layer may comprise $La_2O_3$ in an amount greater than 5.0 mol%, or greater than 10.0 mol%, or greater than 15.0 mol%, or greater than 20.0 mol%, or greater than 25.0 mol%, or greater than 30.0 mol%, or in a range from 5.0 mol% to 40.0 mol%, or in a range from 10.0 mol% to about 35.0 mol%, or in a range from 15.0 mol% to 30.0 mol%.

In embodiments, the glass of the lightguide layer may comprise $B_2O_3$ in an amount greater than 5.0 mol%, or greater than 10.0 mol%, or greater than 15.0 mol%, or greater than 20.0 mol%, or greater than 25.0 mol%, or greater than 30.0 mol%, or in a range from 5.0 mol% to 40.0 mol%, or in a range from 10.0 mol% to 35.0 mol%, or in a range from 15.0 mol% to 30.0 mol%.

In embodiments, the glass of the lightguide layer may comprise $WO_3$ in an amount greater than 5.0 mol%, or greater than 10.0 mol%, or greater than 15.0 mol%, or greater than 20.0 mol%, or greater than 25.0 mol%, or greater than 30.0 mol%, or in a range from 5.0 mol% to 40.0 mol%, or in a range from about 10.0 mol% to 35.0 mol%, or in a range from 15.0 mol% to 30.0 mol%.

In embodiments, the glass of the lightguide layer may comprise $Nb_2O_5$ in an amount greater than 5.0 mol%, or greater than 10.0 mol%, or greater than about 15.0 mol%, or greater than 20.0 mol%, or greater than 25.0 mol%, or greater than 30.0 mol%, or in a range from 5.0 mol% to 50.0 mol%, or in a range from 10.0 mol% to 40.0 mol%, or in a range from 15.0 mol% to 30.0 mol%.

In embodiments, the glass of the lightguide layer may comprise $TiO_2$ in an amount greater than 5.0 mol%, or greater than 10.0 mol%, or greater than 15.0 mol%, or greater than 20.0 mol%, or greater than 25.0 mol%, or greater than 30.0 mol%, or in a range from 5.0 mol% to 40.0 mol%, or in a range from 10.0 mol% to 35.0 mol%, or in a range from 15.0 mol% to 30.0 mol%.

In embodiments, the glass of the lightguide layer may comprise $ZrO_2$ in an amount greater than 2.0 mol%, or greater than 4.0 mol%, or greater than 6.0 mol%, or greater than 8.0 mol%, or greater than 10.0 mol%, or greater than 12.0 mol%, or in a range from 2.0 mol% to 15.0 mol%, or in a range from 4.0 mol% to 12.0 mol%, or in a range from 6.0 mol% to 10.0 mol%.

In embodiments, the glass of the lightguide layer may comprise $P_2O_5$ in an amount greater than 5.0 mol%, or greater than 10.0 mol%, or greater than about 15.0 mol%, or greater than 20.0 mol%, or greater than 25.0 mol%, or greater than 30.0 mol%, or in a range from 5.0 mol% to 40.0 mol%, or in a range from 10.0 mol% to 35.0 mol%, or in a range from 15.0 mol% to 30.0 mol%.

The glass of the lightguide layer may further include one or more constituents selected from rare earth metal oxides ($Re_mO_n$), $Al_2O_3$, BaO, CaO, $K_2O$, $Li_2O$, MgO, $Na_2O$, SrO, $Ta_2O_5$, ZnO, and combinations thereof.

Representative compositions for the glass of the lightguide layer are given in Table 1. In Table 1, $d_{RT}$ refers to the density of the glass at room temperature and $n_d$ is the refractive index at 587.5 nm. The glasses are prepared by combining the glass components in the desired proportions, melting in a crucible, and cooling using methods well known in the art.

Table 1. Exemplary Glass Compositions

| Exemplary Glass | | 1 | 2 | 3 | 4 | 5 | 6 | 7 | |
|---|---|---|---|---|---|---|---|---|---|
| Composition - mol.% | | | | | | | | | |
| $WO_3$ | mol.% | | | 21.99 | | | 13.16 | | |
| $B_2O_3$ | mol.% | | 12.65 | 17.09 | | 23.73 | 32.99 | | |
| $La_2O_3$ | mol.% | | 24.68 | 18.99 | | 9.15 | 15.74 | | |
| $TiO_2$ | mol.% | 21.99 | 32.72 | 16.98 | 28.00 | 12.75 | 8.99 | 21.95 | |
| $Nb_2O_5$ | mol.% | 27.00 | 6.98 | 16.79 | 27.50 | 7.32 | 14.99 | 18.44 | |
| $ZrO_2$ | mol.% | | 8.00 | 7.10 | | 7.23 | 7.00 | | |
| $Y_2O_3$ | mol.% | | 2.54 | 1.00 | | | | | |
| BaO | mol.% | 7.13 | | 0 | 5.71 | | | 7.69 | |
| CaO | mol.% | 7.01 | | 0 | 2.81 | 24.21 | | 21.57 | |
| $SiO_2$ | mol.% | | 12.44 | 0.03 | | 15.61 | 0.032 | | |
| $Ta_2O_3$ | mol.% | 0.03 | | 0.02 | 0.03 | | 0.013 | 0.018 | |
| $Bi_2O_3$ | mol.% | 5.00 | | | | | 7.08 | | |
| $P_2O_5$ | mol.% | 24.85 | | | 25.00 | | | 24.99 | |
| $Li_2O$ | mol.% | 3.64 | | | 2.98 | | | 1.00 | |
| $Na_2O$ | mol.% | | | | 3.98 | | | | |
| $K_2O$ | mol.% | 3.35 | | | 4.01 | | | 4.28 | |
| SrO | mol.% | | | | | | | 0.063 | |
| $n_d$ | | 2.000 | 2.065 | 2.109 | 1.949 | 1.883 | 2.039 | 1.888 | |
| $d_{RT}$ | $g/cm^3$ | 4.097 | 5.139 | 5.516 | 3.602 | 4.135 | 5.402 | 3.465 | |

The refractive index $n_d$ of the lightguide layer is greater than 1.60, or greater than 1.70, or greater than 1.80, or greater than 1.90, or greater than 2.00 or greater than 2.10, or greater than 2.20 or in a range from 1.60 to 2.40, or in a range from 1.70 to 2.20, or in a range from 1.80 to 2.10, or in a range from 1.90 to 2.00.

The density of the lightguide layer is greater than 3.0 $g/cm^3$, or greater than 3.5 $g/cm^3$, or greater than 4.0 $g/cm^3$, or greater than 4.5 $g/cm^3$, or greater than 5.0 $g/cm^3$, or greater than 5.5 $g/cm^3$, or in a range from 3.0 $g/cm^3$ to 6.0 $g/cm^3$, or in a range from 3.5 $g/cm^3$ to 5.5 $g/cm^3$, or in a range from 4.0 $g/cm^3$ to 5.0 $g/cm^3$.

The thickness of the lightguide layer is less than 0.50 mm, or less than 0.40 mm, or less than 0.30 mm, or less than 0.20 mm, or less than 0.10 mm, or in a range from 0.05 mm to 0.50 mm, or in a range from 0.10 mm to 0.45 mm, or in a range from 0.15 mm to 0.40 mm, or in a range from 0.20 mm to 0.35 mm.

The support substrate 506 can comprise a low-density material (e.g., about 2.5 g/cm$^3$ or less) with a low refractive index (e.g., about 1.60 or less). The low-density material can comprise, e.g., glass or other appropriate material such as polymers or plastics. Representative glasses for support substrate 506 include fused silica, soda lime glass, alkali or alkaline earth silica glass, Gorilla$^®$ glass (available from Corning Incorporated), and borosilicates. Representative polymers include polyacrylates, polyimides, polyamides, polycarbonates, polyethylene, and cyclic olefins.

The combination of the glass lightguide layer 503 and support substrate 506 can deliver the combination of attributes desired for AR applications without the limitations that are presented by the exclusive use of a thick bulk glass lightguide 103. The lightguide layer 503 can provide a high refractive index and thin lightguide which facilitates a wider HFOV and improved image quality, while also providing high blue transmittance. As can be seen, decreasing the lightguide thickness ($t_p$) increases the number of replicates M. The thin lightguide layer 503 also allows for the use of smaller source optics 115 with a small exit pupil.

The support substrate 506 offers a low-density component with a thickness that ensures that the geometry and mechanical reliability of the composite lightguide are maintained. The support substrate 506 can set the macro properties of the component such as, e.g., the geometrical and mechanical properties, weight, and bulk optics for real scene rays, etc. The expense of the glass lightguide layer 503 can also be offset using less expensive materials for the support substrate.

The refractive index $n_d$ of the support substrate is less than 1.60, or less than 1.55, or less than 1.50, or less than 1.45, or in a range from 1.40 to 1.60, or in a range from 1.45 to 1.55.

The density of support substrate 506 is less than 3.0 g/cm$^3$, or less than 2.8 g/cm$^3$, or less than 2.6 g/cm$^3$, or less than 2.4 g/cm$^3$, or less than 2.2 g/cm$^3$, or less than 2.0 g/cm$^3$, or in a range from 1.8 g/cm$^3$ to 3.0 g/cm$^3$, or in a range from 2.0 g/cm$^3$ to 2.9 g/cm$^3$, or in a range from 2.1 g/cm$^3$ to 2.8 g/cm$^3$, or in a range from 2.2 g/cm$^3$ to 2.7 g/cm$^3$, or in a range from 2.3 g/cm$^3$ to 2.6 g/cm$^3$.

The thickness of support substrate 506 is greater than 0.20 mm, or greater than 0.30 mm, or greater than 0.40 mm, or greater than 0.50 mm, or in a range from 0.20 mm to 1.0 mm, or in a range from 0.25 mm to 0.90 mm, or in a range from 0.30 mm to 0.80 mm, or in a range from 0.35 mm to 0.70 mm, or in a range from 0.40 mm to 0.60 mm.

In one example of a composite lightguide 500, the lightguide layer 503 comprises La$_2$O$_3$-Nb$_2$O$_5$ glass and the support substrate 506 comprises Gorilla$^®$ glass. Selected refractive index and density data for the La$_2$O$_3$-Nb$_2$O$_5$ glass system is provided in the following reference: A. Masuno, H. Inoue, K Yoshimoto, and Y. Watanabe "Thermal and optical properties of La2O3-Nb2O5 high refractive index glasses" Optical Materials Express 4(4) 710-718 (2014). The lightguide layer properties can be set by tuning the stoichiometry of the (1-x)La$_2$O$_3$-xNb$_2$O$_5$ glass. For x=0.6, the refractive index ($n_d$) is 2.175 and the density ($\rho$) is 5.8 g/cm$^3$. The La$_2$O$_3$-Nb$_2$O$_5$ glass also provides high transmittance of blue light. The properties of the glass support substrate include a refractive index of 1.5 and density of 2.4 g/cm$^3$. Consider a composite substrate sample size of 5cm×5cm with a support substrate thickness of 0.5mm and a lightguide layer thickness of 0.1mm. The weight of the lightguide layer 503 is given by (0.01cm)(5cm)$^2$ x 5.8 g/cm$^3$ = 1.45 g and the weight of the support substrate 506 is given by (0.05cm)(5cm)$^2$ x 2.4 g/cm$^3$ = 3.0 g, for a total weight of 4.45 g. With a sample volume of (0.06cm)(5cm)$^2$, the effective density becomes $\rho$ = 2.97 g/cm$^3$ which is significantly less than the density of a bulk glass lightguide. Thus, the composite lightguide 500 still delivers a high refractive index ($n_{p=}$ 2.175) and high blue transmittance, while offering a significantly reduced density.

The thickness of the composite lightguide 500 is less than 1.00 mm, or less than 0.90 mm, or less than 0.80 mm, or less than 0.70 mm, or less than 0.60 mm, or less than 0.50 mm, or less than 0.40 mm, or less than 0.30 mm, or in a range from 0.30 mm to 1.00 mm, or in a range from 0.35 mm to 0.90 mm, or in a range from 0.40 mm to 0.85 mm, or in a range from 0.45 mm to 0.70 mm.

The ratio of the thickness of the lightguide layer to the thickness of the support substrate is less than 0.70, or less than 0.60, or less than 0.50, or less than 0.40, or less than 0.30, or less than 0.20, or less than 0.10, or in a range from 0.10 to 0.70, or in a range from 0.15 to 0.60, or in a range from 0.20 to 0.55, or in a range from 0.25 to 0.50, or in a range from 0.30 to 0.45.

The density of the composite lightguide 500 is less than 4.0 g/cm$^3$, or less than 3.8 g/cm$^3$, or less than 3.6 g/cm$^3$, or less than 3.4 g/cm$^3$, or less than 3.2 g/cm$^3$, or less than 3.0 g/cm$^3$, or less than 2.8 g/cm$^3$, or less than 2.6 g/cm$^3$, or less than 2.4 g/cm$^3$, or less than 2.2 g/cm$^3$, or in a range from 1.8 g/cm$^3$ to 4.0 g/cm$^3$, or in a range from 2.0 g/cm$^3$ to 3.8 g/cm$^3$, or in a range from 2.2 g/cm$^3$ to 3.6 g/cm$^3$, or in a range from 2.4 g/cm$^3$ to 3.4 g/cm$^3$, or in a range from 2.6 g/cm$^3$ to 3.2 g/cm$^3$, or in a range from 2.7 g/cm$^3$ to 3.1 g/cm$^3$.

The ratio of the density of the lightguide layer to the density of the support substrate is greater than 1.40, or greater than 1.50, or greater than 1.60, or greater than 1.70, or greater than 1.80, or greater than 1.90, or greater than 2.00, or greater than 2.10, or in a range from 1.40 to 2.30, or in a range from 1.40 to 2.20, or in a range from 1.40 to 2.00, or in a range from 1.50 to 1.90, or in a range from 1.60 to 1.80.

The ratio of the density of the composite lightguide to the density of the lightguide layer is less than 0.80, or less than 0.70, or less than 0.60, or less than 0.50, or less than 0.40, or less than 0.30, or in a range from 0.20 to 0.80, or in a range from 0.25 to 0.75, or in a range from 0.30 to 0.70, or in a range from 0.35 to 0.65, or in a range from 0.40 to 0.60.

In addition to the lightguide layer 503 comprising a single material, the lightguide layer 503 in some embodiments can comprise combinations of materials to provide a variety of refractive index profiles. For example, the lightguide layer 503 can have, e.g., a graded index profile, a depressed clad graded index profile, a step index profile, a double clad step index profile, a depressed clad step index profile, a double depressed clad step index profile, an Anderson index profile, or a depressed clad Anderson index profile, or other appropriate refractive index profile. The composite lightguide can be formed by producing the support substrate and lightguide layer separately and then bonding the two together using known adhesive, optical, thermal, etc. bonding processes, and the support substrate and lightguide layer are produced using known methods to make and finish thin sheets of materials such as glasses, polymers, etc. Another approach to forming the composite lightguide consists of forming the lightguide layer directly on the supporting substrate. In this case, the supporting substrate is formed using known methods to make and finish thin sheets of material and the lightguide layer is formed directly on the as-made substrate using methods such as sol-gels, vapor deposition, deposit and sinter, etc. and followed by finishing if required. The methods of making a composite lightguide elucidated here are intended to exemplary in nature; other methods of making composite lightguides may also be possible.

With reference to FIGS. 1A through 5, in view of the foregoing discussion, below is a description of the various embodiments of the present disclosure. It is understood that the below embodiments are not an exhaustive recitation of the possible embodiments of the present disclosure and that other embodiments are described herein.

The composite lightguide comprises a support substrate comprising a surface, e.g., for example a planer surface or a curved surface, and a lightguide layer disposed on the surface of the support substrate. The lightguide layer comprises an entrance grating and an exit grating. The lightguide layer has a refractive index $n_d$ greater than 1.60. A ratio of a density of the lightguide layer to a density of the support substrate is greater than 1.40 and a ratio of a thickness of the lightguide layer to a thickness of the support substrate is less than 0.50.

The ratio of the density of the lightguide layer to the density of the support substrate can be greater than 1.70.

A ratio of a density of the composite lightguide to the density of the lightguide layer can be less than 0.80.

The ratio of the density of the composite lightguide to the density of the lightguide layer can be less than 0.60.

The ratio of the density of the composite lightguide to density of the lightguide layer can be less than 0.40.

The density of the lightguide layer can be greater than 3.5 $g/cm^3$.

The density of the lightguide layer can be greater than 4.0 $g/cm^3$.

The density of the lightguide layer can be greater than 5.0 $g/cm^3$.

The density of the support substrate can be less than 3.0 $g/cm^3$.

The density of the support substrate can be less than 2.6 $g/cm^3$.

The ratio of the thickness of the lightguide layer to the thickness of the support substrate can be less than 0.30.

The thickness of the lightguide layer can be less than 0.20 mm.

The thickness of the lightguide layer can be less than 0.10 mm.

The thickness of the support substrate can be greater than 0.30 mm.

The thickness of the support substrate can be greater than 0.50 mm.

The lightguide layer can have a refractive index $n_d$ greater than 1.8.

The lightguide layer can have a refractive index $n_d$ greater than 2.0.

The support substrate can have a refractive index $n_d$ less than 1.50.

The lightguide layer may comprise glass, the glass preferably comprising one or more of $TiO_2$, $Nb_2O_5$, $WO_3$, $La_2O_3$, and $Bi_2O_3$.

The glass can further comprise $P_2O_3$.

The refractive index $n_d$ of the lightguide layer can be greater than 1.80 and the composite lightguide can have a density less than 4.0 $g/cm^3$.

The composite lightguide can have a density less than 3.6 $g/cm^3$.

Disjunctive language such as the phrase "at least one of X, Y, or Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

It should be emphasized that the above-described embodiments of the present disclosure are merely possible examples of implementations set forth for a clear understanding of the principles of the disclosure. Many variations and modifications may be made to the above-described embodiment(s) without departing substantially from the spirit and principles of the disclosure. All such modifications and variations are intended to be included herein within the scope of this disclosure and protected by the following claims.

The term "substantially" is meant to permit deviations from the descriptive term that don't negatively impact the intended purpose. Descriptive terms are implicitly understood to be modified by the word substantially, even if the term is not explicitly modified by the word substantially.

It should be noted that ratios, concentrations, amounts, and other numerical data may be expressed herein in a range format. It is to be understood that such a range format is used for convenience and brevity, and thus, should be interpreted in a flexible manner to include not only the numerical values explicitly recited as the limits of the range, but also to include all the individual numerical values or sub-ranges encompassed within that range as if each numerical value and sub-range is explicitly recited. To illustrate, a concentration range of "about 0.1% to about 5%" should be interpreted to include not only the explicitly recited concentration of about 0.1 wt% to about 5 wt%, but also include individual concentrations (e.g., 1%, 2%, 3%, and 4%) and the sub-ranges (e.g., 0.5%, 1.1%, 2.2%, 3.3%, and 4.4%) within the indicated range. The term "about" can include traditional rounding according to significant figures of numerical values. In addition, the phrase "about 'x' to 'y'" includes "about 'x' to about 'y'".

**Claims**

1.  A composite lightguide (500), comprising:

    a support substrate (506) comprising a surface; and
    a lightguide layer (503) disposed on the surface of the support substrate (506) , the lightguide layer (503) comprising an entrance grating (106) and an exit grating (109), the lightguide layer (503) having a refractive index $n_d$ greater than 1.60;
    wherein a ratio of a density of the lightguide layer (503)to a density of the support substrate (506) is greater than 1.40 and a ratio of a thickness of the lightguide layer (503) to a thickness of the support substrate (506)is less than 0.50.

2.  The composite lightguide (500) of claim 1, wherein the ratio of the density of the lightguide layer (503) to the density of the support substrate (506) is greater than 1.70.

3.  The composite lightguide (500) of claim 1 or 2, wherein a ratio of a density of the composite lightguide (500) to the density of the lightguide layer (503) is less than 0.80.

4.  The composite lightguide (500) of any of the claims 1-3, wherein the ratio of the density of the composite lightguide (500) to the density of the lightguide layer (503) is less than 0.60.

5.  The composite lightguide (500) of any of the preceding claims, wherein the ratio of the density of the composite lightguide (500) to the density of the lightguide layer (503) is less than 0.40.

6.  The composite lightguide (500) of any of the preceding claims, wherein the density of the lightguide layer (503)is greater than 3.5 g/cm$^3$, preferably wherein the density of the lightguide layer (503)is greater than 4.0 g/cm$^3$, more preferably wherein the density of the lightguide layer (503)is greater than 5.0 g/cm$^3$.

7.  The composite lightguide (500) of any of the preceding claims, wherein the density of the support substrate (506) is less than 3.0 g/cm$^3$, preferably wherein the density of the support substrate (506)is less than 2.6 g/cm$^3$.

8.  The composite lightguide (500) of any of the preceding claims, wherein the ratio of the thickness of the lightguide layer (503) to the thickness of the support substrate (506) is less than 0.30.

9.  The composite lightguide (500) of any of the preceding claims, wherein the thickness of the lightguide layer (503) is less than 0.20 mm, preferably wherein the thickness of the lightguide layer (503) is less than 0.10 mm.

10. The composite lightguide (500) of any of the preceding claims, wherein the thickness of the support substrate (506) is greater than 0.30 mm, preferably wherein the thickness of the support substrate (506)is greater than 0.50 mm.

11. The composite lightguide (500) of any of the preceding claims, wherein the lightguide layer (503) has a refractive index $n_d$ greater than 1.8, preferably wherein the lightguide layer (503) has a refractive index $n_d$ greater than 2.0.

12. The composite lightguide (500) of any of the preceding claims, wherein the support substrate (506) has a refractive index $n_d$ less than 1.50.

13. The composite lightguide (500) of any of the preceding claims, wherein the lightguide layer (503) comprises glass, the glass comprising one or more of $TiO_2$, $Nb_2O_5$, $WO_3$, $La_2O_3$, and $Bi_2O_3$, preferably wherein the glass further comprises

$P_2O_5$.

14. The composite lightguide (500) of any of the preceding claims, wherein the refractive index $n_d$ of the lightguide layer (503) is greater than 1.80 and the composite lightguide (500) has a density less than 4.0 g/cm$^3$.

15. The composite lightguide (500) of any of the preceding claims, wherein the composite lightguide (500) has a density less than 3.6 g/cm$^3$.

# FIG. 1A

$$\theta_d = \sin^{-1}\left[\frac{1}{n_p}\left(\sin\theta_i + \frac{\lambda}{\Lambda}\right)\right]$$

$\theta_i$ = incident field angle
$\theta_d$ = in-plate diffracted angle
$\Lambda$ = Diffraction grating pitch
$t_p$ = plate thickness
$n_p$ = plate refractive index
$D_{EnP}$ = Entrance pupil width = entrance grating width
$D_{ExP}$ = Exit pupil width = Exit grating width
$d$ = distance between entrance pupil replicates

# FIG. 1B

$\theta_i = -\theta_{max}$                                          $M_{max}$

$\theta_{dmin}$

$\theta_{dmin} = \theta_c$

# FIG. 1C

$\theta_i = +\theta_{max}$                          $M_{min}$

$\theta_{dmax}$

$\theta_{dmax} < 90°$

# FIG. 1D

R-Limited HFOV vs. $n_p$ for **R = 3**

**FIG. 2A**

R-Limited HFOV vs. $n_p$ for **R = 5**

**FIG. 2B**

R-Limited HFOV vs. $n_p$ for $\textbf{\textit{R = 8}}$

**FIG. 2C**

Just-Filled Limited HFOV vs. $n_p$ for $\textbf{\textit{D}}_{\textbf{\textit{EnP}}}$ = $\textbf{\textit{2.0 mm}}$

**FIG. 3A**

Just-Filled Limited HFOV vs. $n_p$ for $D_{EnP} = 2.75\,mm$

**FIG. 3B**

Just-Filled Limited HFOV vs. $n_p$ for $D_{EnP} = 3.5\,mm$

**FIG. 3C**

## Maximum Lightguide Thickness for R = 4.75

**FIG. 4**

**FIG. 5**

Europäisches
Patentamt

European
Patent Office

Office européen
des brevets

# EUROPEAN SEARCH REPORT

**Application Number**

EP 24 19 1667

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 460 701 B2 (FACEBOOK TECH LLC [US]; META PLATFORMS TECH LLC [US]) 4 October 2022 (2022-10-04) * figures 9,12 * * column 1, lines 13-45 * * column 14, line 12 - column 15, line 20 * * column 19, lines 16-27 * ----- | 1-15 | INV. G02B27/01 |
| A | US 11 067 733 B2 (DISPELIX OY [FI]) 20 July 2021 (2021-07-20) * column 3, lines 26-53; figure 1 * ----- | 1-15 | |

**TECHNICAL FIELDS SEARCHED (IPC)**

G02B

The present search report has been drawn up for all claims

| Place of search | Date of completion of the search | Examiner |
|---|---|---|
| Munich | 2 August 2024 | Passier, Martinus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                     

& : member of the same patent family, corresponding document

EPO FORM 1503 03.82 (P04C01)

**EP 4 509 902 A1**

## ANNEX TO THE EUROPEAN SEARCH REPORT
## ON EUROPEAN PATENT APPLICATION NO.

EP 24 19 1667

02-08-2024

| Patent document cited in search report | | Publication date | Patent family member(s) | | Publication date |
|---|---|---|---|---|---|
| US 11460701 | B2 | 04-10-2022 | CN | 114127596 A | 01-03-2022 |
| | | | EP | 4049082 A1 | 31-08-2022 |
| | | | JP | 2022553595 A | 26-12-2022 |
| | | | US | 2021124108 A1 | 29-04-2021 |
| | | | US | 2021124170 A1 | 29-04-2021 |
| | | | WO | 2021080734 A1 | 29-04-2021 |
| US 11067733 | B2 | 20-07-2021 | CA | 3095249 A1 | 03-10-2019 |
| | | | CN | 111902765 A | 06-11-2020 |
| | | | EP | 3729178 A1 | 28-10-2020 |
| | | | FI | 20185292 A1 | 29-09-2019 |
| | | | JP | 7328235 B2 | 16-08-2023 |
| | | | JP | 2021517264 A | 15-07-2021 |
| | | | KR | 20200136369 A | 07-12-2020 |
| | | | SG | 11202008156U A | 29-09-2020 |
| | | | US | 2021116622 A1 | 22-04-2021 |
| | | | WO | 2019185989 A1 | 03-10-2019 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11460701 B2

**Non-patent literature cited in the description**

- **T. LEVOLA**. Diffractive Optics for Virtual Reality Displays. *Journal of the SID*, 2006, vol. 14 (5), 467-475

- **A. MASUNO** ; **H. INOUE** ; **K YOSHIMOTO** ; **Y. WATANABE**. Thermal and optical properties of La2O3-Nb2O5 high refractive index glasses. *Optical Materials Express*, 2014, vol. 4 (4), 710-718